# EUROPEAN PATENT APPLICATION

(11) **EP 1 727 142 A2**
(43) Date of publication of application: **29.11.2006**
(21) Application number: 06112568.8
(22) Date of filing: 12.04.2006
(51) Int. Cl.: G11B 19/12

(54) **Disc loading method for optical disc apparatus**

(30) Priority: 24.05.2005 KR 20050043660
(71) Applicant: SAMSUNG ELECTRONICS CO., LTD., Suwon-si, Gyeonggi-do (KR)
(72) Inventor: BANG, Kyu Chul, Seoul (KR); KAY, Hyon-Sok, Seoul (KR)
(74) Representative: Waddington, Richard

(57) **Abstract**

A disc loading method for an optical disc apparatus, wherein, where a disc (10) having a reproduction-only area is loaded in the optical disc apparatus, if signal quality of the reproduction-only area of the disc (10) is acceptable, a signal adjustment operation on this reproduction-only area is skipped so as to shorten the lead-in time needed for signal adjustment. The method includes measuring a signal of a reproduction-only area of the disc (10) to obtain a signal value of the signal, comparing the signal value of the reproduction-only area with a predetermined reference value for the signal, and if the signal value is less than the predetermined reference value, reading information regarding the disc (10) to load the disc (10) in the optical disc apparatus without signal adjustment of the reproduction-only area.

## Description

An aspect of the present invention relates to a disc loading method for use with an optical disc apparatus, and, more particularly, to a disc loading method for use with an optical disc apparatus wherein a disc may be more promptly loaded in the optical disc apparatus.

With recent advances in video and audio media technologies, recording media, in which high quality video and audio data may be recorded and stored for long periods of time, for example optical discs such as digital versatile discs (DVDs), have been developed and made commercially available. Along with this type of medium, optical disc apparatuses which record/reproduce video and audio data on optical discs, for example DVD players, have also been developed and made commercially available.

The optical disc apparatuses reproduce video and/or audio data recorded on the optical discs and output the reproduced data via screens and/or speakers. The optical disc apparatuses have various advantages over conventional video and/or audio reproducing apparatuses in terms of higher-quality video and/or audio signal reproduction due to a higher signal-to-noise ratio, a lower noise level due to regularities in reproduction and modulation, minimal signal distortion, ghost-free reproduction, and a random access capability. Thus, the optical disc apparatuses have been rapidly advanced and used widely.

Various types of optical disc apparatuses, such as a compact disc player (CDP), a laser disc player (LDP), a compact disc graphic player (CDGP), and a video compact disc player (VCDP), have been developed and used extensively. Recently, DVDs have been developed using moving picture compression techniques such as moving picture experts group 2 (MPEG2), moving picture experts group 4 (MPEG4), and Digital Video EXpress (DivX). A Blu-ray disc (BD) and a high definition-DVD (HD-DVD) have also been developed using blue laser technology. Concurrently, optical disc players and DVD players have been developed to record and playback information recorded on these types of discs.

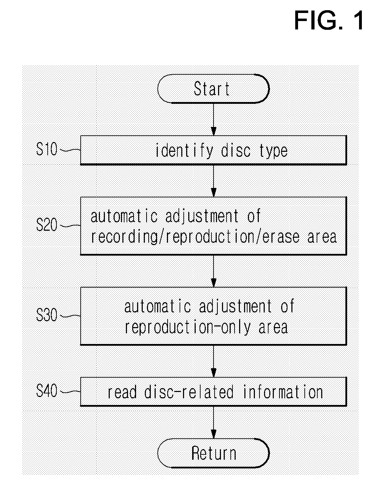

To perform recording or reproduction operations in such an optical disc apparatus, a sequence of operations constituting a conventional disc loading method, as shown in FIG. 1, are performed. First, the user opens a disc tray, places a disc in the disc tray, and closes the disc tray. Then, the optical disc apparatus loads the installed disc, identifies the type of the loaded disc, and sets basic signal values for recording/reproducing/erasing of the type identified disc (10). After the basic signal values for recording/reproducing/erasing of the disc are set, a signal adjustment procedure is automatically performed to optimally record and reproduce the disc.

The signal adjustment procedure mainly includes a servo signal adjustment operation to drive the disc, and a radio frequency (RF) signal adjustment operation to enhance the quality of an optical information signal which is recorded/reproduced on/from the disc. Signal adjustment operations are automatically performed in a predetermined order after the type of the disc is identified. That is, a signal adjustment operation is performed on an area of the disc in which actual data is recorded, or from which actual data is reproduced or erased (20). Afterwards, another signal adjustment operation is performed on a reproduction-only area of the disc in which disc-related basic information is recorded in a form of permanently unalterable wobbles or pits (30).

After the signal adjustment procedure is automatically performed, the disc-related basic information stored in a lead-in zone of the loaded disc such as disc IDentification (ID), disc size, configuration of a data area, copyright protection and copy prevention data is read once when the disc is loaded, and a disc recording or reproduction operation is performed based on this information (40).

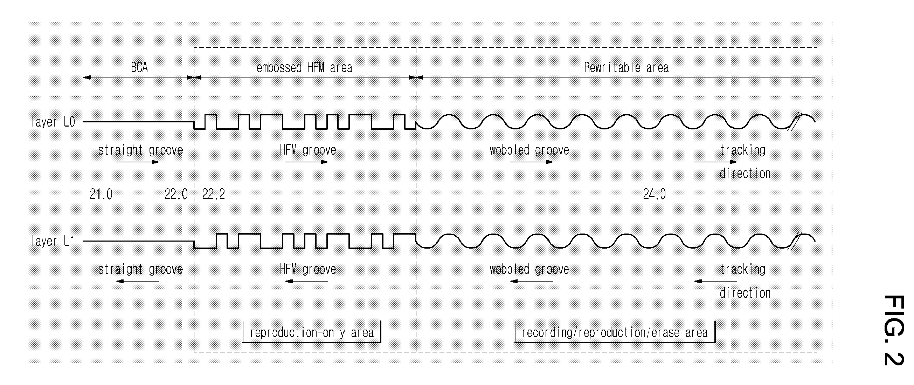

The disc-related basic information, such as disc ID, disc size, configuration of a data area, copyright protection and copy prevention data, is stored in the reproduction-only area of the disc, which is typically located at an innermost part of the disc, as shown in FIG. 2, in the form of permanently unalterable wobbles or pits. The reproduction-only area is followed by an area in which actual data may be recorded, or from which actual data may be reproduced or erased (hereinafter, referred to as a recording/reproduction/erase area).

FIG. 2 illustrates the track format of a typical BD, which is one type of an optical disc including areas having different physical/chemical properties. As shown in FIG. 2, the reproduction-only area storing the disc-related basic information and the recording/reproduction/erase area are constructed to have different physical properties (track pitch, data bit length, wobble formation, and the like) and different chemical properties. In particular, the reproduction-only area is different from the recording/reproduction/erase area in terms of the optical signal reflected from an information layer of the disc. For this reason, performing a separate signal adjustment operation on the reproduction-only area with a different optical signal from that of the recording/reproduction/erase area is necessary. Thus, a longer time to perform a signal adjustment procedure is required, lengthening the disc loading time (lead-in time).

The invention provides a disc loading method for an optical disc apparatus, wherein, where a disc is loaded in the optical disc apparatus, if signal quality of a reproduction-only area of the disc, which is read only once, is acceptable, a signal adjustment operation on this reproduction-only area is skipped so as to shorten a lead-in time needed for signal adjustment.

Additional and/or other and advantages of the invention will be set forth in part in the description which follows and, in part, will be obvious from the description, or may be learned by practice of the invention.

According to the present invention there is provided an apparatus and method as set forth in the appended claims. Preferred features of the invention will be apparent from the dependent claims, and the description which follows.

According to an aspect of the invention, there is provided a method of loading a disc in an optical disc apparatus, comprising: measuring a signal of a reproduction-only area of the disc to obtain a signal value of the signal; comparing the signal value of the reproduction-only area with a predetermined reference value for the signal, and reading information regarding the disc if the signal value is less than the predetermined reference value, to load the disc in the optical disc apparatus.

The method further preferably comprises performing a first signal adjustment operation on the reproduction-only area before the reading information regarding the disc, if the signal value is below the predetermined reference value. The method preferably further comprises performing a second signal adjustment operation on a recording/reproduction/erase area of the disc where data is recorded and reproduced before the performing of the first signal adjustment operation on the reproduction-only area. The first signal adjustment operation and the second signal adjustment operation may be automatically performed on the reproduction-only area and the recording/reproduction/erase area, respectively. The signal value of the reproduction-only area may be a jitter value measured from the corresponding signal of the reproduction-only area. The reference value may be a standard jitter value set to enable access to the reproduction-only area of the disc.

According to another aspect of the invention, there is provided a method of loading a disc in an optical disc apparatus, comprising: identifying a type of the disc and setting a reference value in advance of determining a possibility of reproduction of the disc according to the identified type; measuring a signal of a reproduction-only area of the disc to obtain a signal value of the signal; comparing the signal value of the reproduction-only area with the reference value set in advance, and performing a first signal adjustment operation on the reproduction-only area before reading information regarding the disc, if the measured signal value is not less than the reference value.

The method preferably further comprises automatically performing a second signal adjustment operation on a recording/reproduction/erase area of the disc where data is recorded and reproduced before the performing of the first signal adjustment operation on the reproduction-only area. The method preferably further comprises, if the signal value is less than the reference value, reading information regarding the disc to load the disc in the optical disc apparatus without performing the first signal adjustment operation on the reproduction-only area.

For a better understanding of the invention, and to show how embodiments of the same may be carried into effect, reference will now be made, by way of example, to the accompanying diagrammatic drawings in which:
FIG. 1 is a flow chart illustrating a disc loading method in a conventional optical disc apparatus;
FIG. 2 is a block diagram showing the track format of a typical optical disc;
FIG. 3 is a block diagram showing the system configuration of an optical disc apparatus according to an embodiment of the present invention; and
FIG. 4 is a flow chart illustrating a disc loading method in the optical disc apparatus according to an embodiment of the present invention.

Reference will now be made in detail to the present embodiments of the present invention, examples of which are illustrated in the accompanying drawings, wherein like reference numerals refer to the like elements throughout.

The embodiments are described below in order to explain the present invention by referring to the figures.

As is described above, the reproduction-only area to store the disc-related basic information is read only once when the disc is loaded. If signal quality of this read-once reproduction-only area is acceptable, skipping the signal adjustment operation on this reproduction-only area may be possible. However, in the conventional disc loading method for the optical disc apparatus, the lead-in time may be longer than necessary owing to an unnecessary signal adjustment operation on the reproduction-only area, degrading overall system performance.

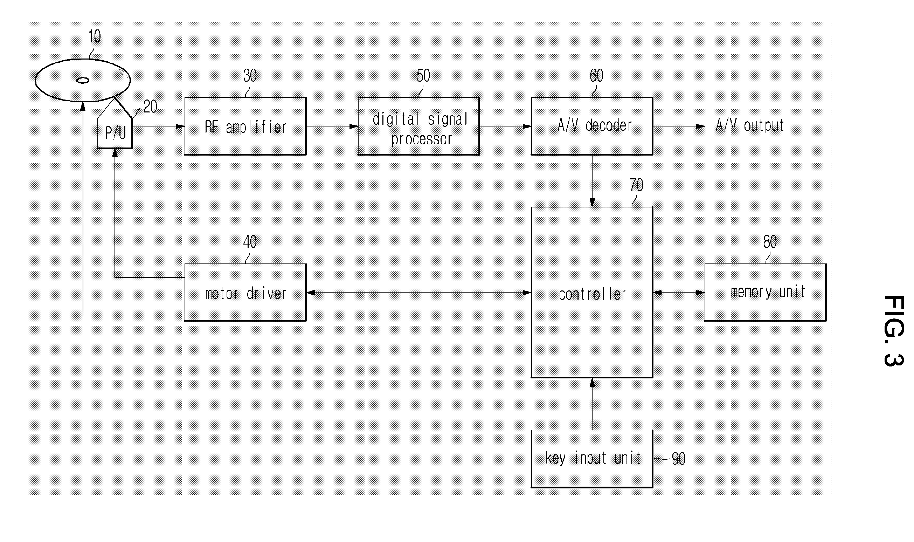

FIG. 3 is a block diagram showing the system configuration of an optical disc apparatus according to an embodiment of the present invention. The optical disc apparatus comprises a disc 10, an optical pickup 20, a radio frequency (RF) amplifier 30, a motor driver 40, a digital signal processor 50, an audio/video (A/V) decoder 60, a controller 70, a memory unit 80, and a key input unit 90.

The optical pickup 20 performs an optical pickup operation on the disc 10 loaded in a disc tray (not shown) to read information (for example, video and audio data stream) recorded on the disc 10. The RF amplifier 30 converts the information read by the optical pickup 20 into a high frequency signal (RF signal) and outputs the converted RF signal to the digital signal processor 50. The motor driver 40 performs a servo control operation to change a rotational speed of the disc 10 and a data read position of the optical pickup 20 in response to a control operation of the controller 70.

The digital signal processor 50 processes the converted RF signal into a digital video and audio signal in a reproduction mode, detects and corrects errors in the digital video and audio signal, and outputs the error-corrected digital video and audio signal to the A/V decoder 60. The A/V decoder 60 decodes the digital video and audio signal error-corrected through the digital signal processor 50 based on a moving picture experts group (MPEG) compression format, and outputs the decoded video and audio signal.

The controller 70 identifies the type of the disc 10, sets basic signal values for recording/reproduction/erasing of the disc 10 according to the identified type of the disc, and automatically controls separate signal adjustment operations on a reproduction-only area and recording/reproduction/erase area of the disc 10. The controller 70 also sets reference values (for example, focus/track error, jitter, error-correcting code (ECC) error rate) for signals that enable access to the reproduction-only area, and controls an overall operation of the optical disc apparatus.

That is, when the disc 10, having the reproduction-only area therein is loaded, the controller 70 measures signals to be adjusted (focus/track error, jitter, ECC error rate and the like, specifically, jitter values thereof) prior to starting a signal adjustment operation on the reproduction-only area, and determines if measured signal values of the signals are less than the corresponding reference values set to enable access to the reproduction-only area. If the measured signal values are less than the corresponding reference values, the controller 70 skips the signal adjustment operation on the reproduction-only area and proceeds to a next stage, shortening the time required for signal adjustment operations and, thus, minimizing the lead-in time.

After the disc 10 is loaded, the controller 70 recognizes disc-related information (disc ID, disc size, configuration of a data area, copyright protection and copy prevention data) stored in a lead-in zone of the disc 10, and stores the disc-related information in the memory unit 80 as a backup.

The memory unit 80 is used to store the disc-related information read and downloaded from the lead-in zone of the disc 10. The key input unit 90 is used to input key signals indicating an opening or a closing of the disc tray, a power on or a power off operation of the optical disc apparatus, data recording, and a reproducing or an erasing of the disc 10 to the controller 70, or a combination thereof.

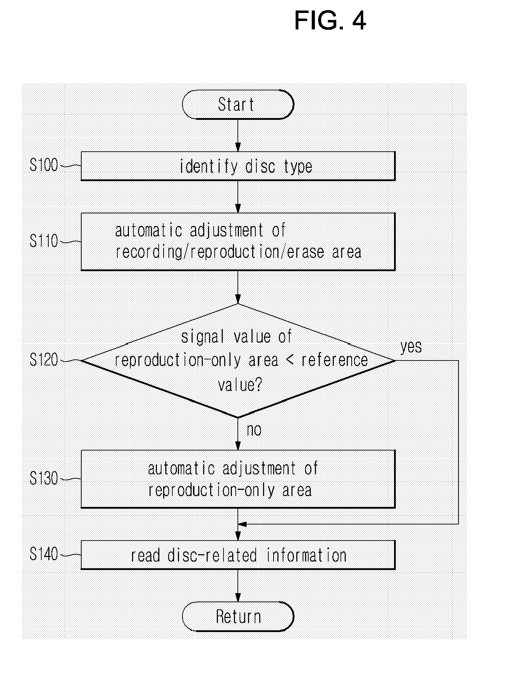

Hereinafter, a description will be given of operations and effects of a disc loading method for the optical disc apparatus with the above-stated configuration. FIG. 4 is a flow chart illustrating the disc loading method in the optical disc apparatus according to the present invention. First, the user opens a disc tray, installs a disc 10 in the disc tray, and closes the disc tray. Then, the controller 70 loads the installed disc 10, identifies the type thereof, and sets basic signal values for recording, reproducing or erasing of data corresponding to the installed disc 10 of the identified type (100).

At this time, a standard jitter value, serving as a criterion to determine reproduction signal quality in the optical disc apparatus, is set. Although this standard jitter value is clearly stated as "BD: 7%, DVD: 8%, CD: 35ns" in disc format books, an actual standard jitter value to determine the reproduction-possibility of a disc 10 is set differently for each product. For this reason, the standard jitter value is set to a reproduction-possible jitter value according to the identified type of the disc 10.

After the basic signal values for recording, reproducing or erasing of data and the standard jitter value are set according to the identified type of the disc 10, an automatic signal adjustment operation is started to optimally adjust servo and RF signals of the disc 10. At this time, the site in which the signal adjustment operation is automatically performed is the recording/reproduction/erase area where actual data is recorded and reproduced (110).

Afterwards, if the loaded disc 10 includes a reproduction-only area, as shown in FIG. 2, a signal adjustment operation will be automatically performed on this reproduction-only area. Prior to actually performing the signal adjustment operation on the reproduction-only area, the controller 70 measures signals to be adjusted and determines if measured signal values (specifically, jitter values) of the signals of the reproduction-only area are less than the reference value (standard jitter value) set to enable access to the reproduction-only area (120).

According to aspects of the invention, a jitter value is small if a quality of the signal is determined to be high, and a jitter value is large if a quality of the signal is determined to be low. If a jitter value is greater than or equal to a certain value, a reproduction operation cannot be performed.

If a particular one of the signal values of the signals of the reproduction-only area is not less than the reference value, the controller 70 determines that the quality of a signal associated with the particular signal value is not acceptable, and automatically performs a signal adjustment operation on items related with the particular signal (130). After completion of this automatic signal adjustment operation, disc-related basic information stored in a lead-in zone of the loaded disc such as disc ID, disc size, configuration of a data area, and copyright protection and copy prevention data is read once when the disc 10 is loaded, and then a disc recording or reproduction operation is performed based on this information (140).

On the other hand, if the signal values of the signals of the reproduction-only area are determined to be less than the reference value at operation 120, the controller 70 determines that the quality of the signals of the reproduction-only area is acceptable, skips the signal adjustment operation on the reproduction-only area, and proceeds to operation 140. Skipping the signal adjustment operation on the reproduction-only area shortens the loading time (lead-in time) of the disc 10.

As is apparent from the above description, the present invention provides a disc loading method for an optical disc apparatus, wherein, where a disc is loaded in the optical disc apparatus, if signal quality of a reproduction-only area of the disc being read only once is acceptable, an unnecessary signal adjustment operation on the reproduction-only area is skipped so as to shorten a lead-in time needed for signal adjustment and, thus, enhancing overall system performance.

It is also noted that aspect of the present invention may be embodied in a computer readable medium that may execute the methods as described above.

Although a few preferred embodiments have been shown and described, it will be appreciated by those skilled in the art that various changes and modifications might be made without departing from the scope of the invention, as defined in the appended claims.

Attention is directed to all papers and documents which are filed concurrently with or previous to this specification in connection with this application and which are open to public inspection with this specification, and the contents of all such papers and documents are incorporated herein by reference.

All of the features disclosed in this specification (including any accompanying claims, abstract and drawings), and/or all of the steps of any method or process so disclosed, may be combined in any combination, except combinations where at least some of such features and/or steps are mutually exclusive.

Each feature disclosed in this specification (including any accompanying claims, abstract and drawings) may be replaced by alternative features serving the same, equivalent or similar purpose, unless expressly stated otherwise. Thus, unless expressly stated otherwise, each feature disclosed is one example only of a generic series of equivalent or similar features.

The invention is not restricted to the details of the foregoing embodiment(s). The invention extends to any novel one, or any novel combination, of the features disclosed in this specification (including any accompanying claims, abstract and drawings), or to any novel one, or any novel combination, of the steps of any method or process so disclosed.

## Claims

1. A method of loading a disc (10) in an optical disc apparatus, comprising:
measuring a signal of a reproduction-only area of the disc (10) to obtain a signal value of the signal;
comparing the signal value of the reproduction-only area with a predetermined reference value for the signal, and, if the signal value is less than the predetermined reference value, only reading information from or recording information onto the disc (10) so as to complete an operation to load the disc (10) in the optical disc apparatus.

2. The method as set forth in claim 1, further comprising performing a first signal adjustment operation on the reproduction-only area before the reading information regarding the disc (10), if the signal value is higher than the predetermined reference value.

3. The method as set forth in claim 2, further comprising performing a second signal adjustment operation on a recording/reproduction/erase area of the disc (10) where data is recorded and reproduced before the performing of the first signal adjustment operation on the reproduction-only area.

4. The method as set forth in claim 3, wherein the first signal adjustment operation and the second signal adjustment operation are automatically performed on the reproduction-only area and the recording/reproduction/erase area, respectively.

5. The method as set forth in any preceding claim, wherein the signal value of the reproduction-only area is a jitter value measured from the corresponding signal of the reproduction-only area.

6. The method as set forth in any preceding claim, wherein the reference value is a standard jitter value set to enable access to the reproduction-only area of the disc (10).

7. A method of loading a disc (10) in an optical disc apparatus, comprising:
identifying a type of the disc (10) and setting a reference value in advance of determining a possibility of reproduction of the disc (10) according to the identified type;
measuring a signal of a reproduction-only area of the disc (10) to obtain a signal value of the signal;
comparing the signal value of the reproduction-only area with the set reference value, and performing a first signal adjustment operation on the reproduction-only area before reading information from or recording information onto the disc (10), if the measured signal value is not less than the reference value.

8. The method as set forth in claim 7, further comprising automatically performing a second signal adjustment operation on a recording/reproduction/erase area of the disc (10) where data is recorded and reproduced before the performing of the first signal adjustment operation on the reproduction-only area.

9. The method as set forth in claim 7, further comprising, if the signal value is less than the reference value, reading information regarding the disc (10) to load the disc (10) in the optical disc apparatus without performing the first signal adjustment operation on the reproduction-only area.

10. A disc loading method for use with an optical disc apparatus, into which a disc (10), including a recording/reproduction/erasing area, is loaded, the apparatus identifying a type of the disc (10) and setting basic signal values for recording, reproducing or erasing of data to/from the disc (10) corresponding to the identified type of the disc (10), the method comprising:
setting a standard jitter value to a reproduction-possible jitter value according to the identified type of the disc (10); and
if the disc (10) includes a reproduction-only area and if a signal reflected from the reproduction-only area has a jitter that is not less than the standard jitter value, performing a first signal adjustment operation on the reproduction-only area, wherein, if the jitter is less than the standard jitter value, skipping the performing of the first signal adjustment and performing a recording/reproduction/erasing operation on the recording/reproduction/erasing area.

11. The method according to claim 10, wherein the standard jitter value serves as a criterion to determine reproduction signal quality in the optical disc apparatus.

12. The method according to claim 11, wherein, if the standard jitter value is determined to be small compared to a predetermined value, a quality of the signal is determined to be high, and, if a standard jitter value is determined to be large compared to the predetermined value, a quality of the signal is determined to be low.

13. The method according to any one of claims 10 to 12, wherein the signal adjustment operation is performed on items related to the signal.

14. The method according to any one of claims 10 to 12, further comprising performing a disc recording or reproduction operation on the disc (10) after the performing of the signal adjustment operation.

15. A disc loading method for use with an optical disc apparatus, into which a disc (10), including a recording/reproduction/erase area, is loaded, the apparatus identifying a type of the disc (10) and setting basic signal values for recording, reproducing or erasing of data to/from the disc (10) corresponding to the identified type of the disc (10), the method comprising:
setting a standard jitter value to a reproduction-possible jitter value according to the identified type of the disc (10);
performing an automatic signal adjustment operation on the recording/reproduction/erase area of the disc (10) where data is to be recorded to/reproduced from/erased from; and
if the disc (10) includes a reproduction-only area and if a signal reflected from the reproduction-only area has a jitter that is not less than the standard jitter value, performing a signal adjustment operation on the reproduction-only area, wherein, if the jitter is less than the standard jitter value, skipping the performing of the signal adjustment operation on the reproduction-only area and performing the recording/reproduction/erasing to/from the disc (10).

16. A method of operating a disc loading apparatus, comprising:
identifying a type of a disc (10) that is loaded in the apparatus and setting a reference signal value of signal quality according to the identified type;
performing an automatic adjustment of a recording/reproduction/erase area of the disc (10);
determining if the disc (10) includes a recording-only area;
if the disc (10) includes the recording-only area and if a signal reflected from the recording-only area has a signal value that is greater than the reference signal value, performing a signal adjustment of the reproduction-only area; and
if the disc (10) includes the recording-only area and if the signal reflected from the recording-only area has a signal value that is less than the reference signal value, skipping the performing of the signal adjustment of the reproduction-only area and performing a recording/reproduction/erase operation to/from the disc (10).

17. A computer readable medium to execute the method according to any one of claims 10 to 16.

18. An optical disc apparatus into which a disc (10) having a reproduction-only area is loaded, the apparatus including an optical pickup (20), a radio frequency (RF) amplifier (30), a digital signal processor (50), and a decoder (60), the apparatus comprising:
a controller (70) to identify a type of the disc (10), to measure signals to be adjusted prior to starting a signal adjustment operation on the reproduction-only area, and to determine if measured signal values of the signals are less than preset corresponding reference values set to enable access to the reproduction-only area, wherein if the measured signal values are less than the preset corresponding reference values, the signal adjustment operation on the reproduction-only area is skipped.
